# EUROPÄISCHE PATENTANMELDUNG

(11) **EP 1 455 316 A1**
(43) Veröffentlichungstag der Anmeldung: **08.09.2004**
(21) Anmeldenummer: 03100528.3
(22) Anmeldetag: 04.03.2003
(51) Int. Cl.: G07F 19/00, G06F 17/60

(54) **Computergestütztes tokenbasierendes Transaktionsverfahren und Transaktionssystem**

(71) Anmelder: Swisscom AG, 3000 Bern 29 (CH)
(72) Erfinder: Balsiger, Peter, Dr., 3012 Bern (CH); Messmer, Bruno, Dr., 3600 Thun (CH)
(74) Vertreter: Scheuzger, Beat Otto

(57) **Zusammenfassung**

Computergestütztes, tokenbasierendes Transaktionsverfahren und - system, bei welchem eine Zahlung (7) eines ersten Benutzers (10) für einen zweiten Benutzer (11) bei einem Geldinstitut ausgelöst wird. Ein Tokenmodul (102) einer ersten mobile Netzwerkeinheit (101) eines ersten Benutzers (10) generiert einen Datentoken (1), welcher Datentoken (1) einen bestimmbaren Geldbetragswert und Identifikation eines zweiten Benutzers (11) einer zweiten mobilen Netzwerkeinheit (111) umfasst. Die Zentraleinheit (16) belastet den Geldbetragswert auf einem Kreditkonto des ersten Benutzers (10) und bestätigt mittels einer Datenmeldung (2) an eine mobile Netzwerkeinheit (111) des zweiten Benutzers (11) die Geldtransaktion. Der Geldbetragswert wird dann auf einem Konto eines Geldinstitutes (13) des zweiten Benutzers (11) gutgeschrieben.

## Beschreibung

Die vorliegende Erfindung betrifft ein computergestütztes, tokenbasierendes Transaktionsverfahren und ein Transaktionssystem, bei welchem mittels elektronischer Datentoken Transaktionen für Geldbetragswerte über ein Netzwerk durchgeführt werden. Insbesondere betrifft die vorliegende Erfindung ein computergestütztes, tokenbasierendes Transaktionsverfahren und ein entsprechendes System für mobile Netzwerkeinheiten, wie z.B. Mobilfunktelefone, die über ein Mobilfunknetz, im Speziellen ein GSM-, GPRS oder UMTS-Netz kommunizieren.

Elektronischer Geldtransfer oder andere Arten der elektronischen Übertragung eines Geldbetragwertes, z.B. zum Bezahlung einer Ware vom Konto eines Käufers auf ein Konto eines Verkäufers kann aus der heutigen Finanzwelt und Kommerz nicht mehr weggedacht werden. Dabei ist die Verwendung eines Token, d.h. eines Objektes, das die Zahlungsfähigkeit des Käufers und/oder Schuldners bestätigt, allgegenwärtig geworden. Ob der Käufer nun mit einer Kreditkarte, wie z.B. eine Visa-Karte oder eine Kundenkarte eines Verteilers etc., oder einer Debitkarte, wie z.B. eine Euro-Karte oder eine Bankkarte, Waren einkauft, alle Transaktionen basieren schlussendlich auf einer Geldübertragung mittels eines Token, der dazu dient, den Käufer und ein ihm zugeordnetes Konto eindeutig zu identifizieren. Seit der Einführung von tokenbasierenden Transaktionsverfahren in den späten 50er Jahren bekam ihre Verwendung vor allem an Verkaufsstellen und Kassen als bargeldloses Einkaufen eine grosse Bedeutung. Gleichzeitig nahm jedoch auch der Missbrauch und Betrug durch Dritte bei solchen Verfahren stetig zu. Zurzeit beruht der Missbrauch in diesem Gebiet in den meisten Fällen auf verlorenen, gestohlenen oder gefälschten Kredit- oder Debitkarten.

Kreditkarten funktionieren ohne die Verwendung von sog. PIN-Codes (Personal Identification Number). Dies bedeutet, dass verlorene Kreditkarten einfach missbraucht werden können, wenn sie in falsche Hände fallen. Obwohl der Diebstahl eines Token bei weitem die meisten Missbräuche ausmacht, stiegen die Missbräuche durch gefälschte Kreditkarten in den letzten Jahren schnell an. Gefälschte Kreditkarten werden von technisch versierteren Kriminellen hergestellt, welche zur Fälschung der Karte eine gültige Kontonummer eines Kreditkartenhalters verwenden, diese auf die gefälscht Karte prägen und den Magnetstreifen auf der Karte entsprechend kodieren. Die Karte wird dann z.B. zum Kaufen von Waren verwendet, bis die Kreditlimite der Karte erreicht ist.

Debitkarten, im Gegensatz zu Kreditkarten, werden im Allgemeinen in Verbindung mit einem PIN-Code verwendet. Verlorene Debitkarten können deshalb nicht so einfach missbräuchlich verwendet werden, falls der Besitzer den PIN-Code nicht z.B. auf der Karte vermerkt hat. Ebenso ist es für Dritte schwieriger, eine Debitkarte zu fälschen, da der Fälscher nicht nur eine Kontonummer, sonder auch die zugeordnete PIN wissen muss. Es wurden mit der Zeit jedoch verschiedenste Methoden entwickelt, wie man die PIN von unachtsamen Kartenbesitzern bekommen kann. Diese Methoden reichen von sog. Trojanischen Pferden in Verbindung mit falschen oder manipulierten Geldautomaten, die dann zwar Geld ausgeben aber gleichzeitig die PIN speichern, bis zu ebenfalls manipulierten oder falschen Kreditkartenvorrichtungen bei Verkaufsstellen etc. Die im Folgenden hergestellte Fälschung unter Verwendung der Kontonummer und der PIN kann nun z.B. an Bankautomaten solange verwendet werden, bis das Konto leer ist.

Industrie und Handel kennen die Möglichkeiten des Missbrauchs von Kredit- und Debitkarten und sind dauernd bemüht, den Sicherheitsstandart zu heben. Die relativ schwache Verbindung zwischen Token und Benutzer ist jedoch der fundamentale Grund hinter den meisten heutigen Missbräuchen. So kann rechtlich nicht einmal verifiziert werden, ob der Missbrauch nicht gar durch den Kartenhalter selbst getätigt wurde, indem er nachträglich behauptet, die Karte sei ihm (z.B. zusammen mit der PIN) entwendet worden etc. Verschiedenste Lösungen wurden von der Industrie bereits vorgeschlagen, wie z.B. die Verwendung von biometrischen Merkmalen, welche auf dem Token, z.B. auf dem Magnetstreifen der Karte, abgespeichert werden. In allen Fällen scheitert aber ihre Marktakzeptanz an den daraus resultierenden viel grösseren administrativen und/oder hardwaremässigen Kosten.

Eine andere, heute vermehrt gebrauchte Lösung, basiert auf der Verwendung von virtuellem, d.h. elektronischem Geld. Mittels virtuellen Geldes lassen sich im elektronischen Handel Geldtransaktionen von einem Teilnehmer zu einem anderen ausführen. Virtuelles Geld besteht aus z.B. zertifizierten und geschützten Dateneinheiten, welche einem bestimmten Geldbetragswert entsprechen, ähnlich den gängigen Währungseinheiten in Papier- oder Münzenform. Virtuelles Geld findet heute Anwendung bei Geldtransaktionen in Computernetzwerken, wie dem internationalen Backbone-Netzwerk (Internet), oder dem Mobilfunknetzwerk. In der Mobilfunktechnologie können damit z.B. Geldbetragswerte von einer SIM-Karte eines Mobilfunktelefons auf die SIM-Karte eines anderen Mobilfunktelefons übertragen werden. Die Nachteile von elektronischem Geld liegen jedoch darin, dass für virtuelles Geld die Sicherheitsmassstäbe, die an solche Geldeinheiten gestellt werden müssen, nicht oder nur unter grossem Hard- und Software-Aufwand realisiert werden können. Dazu gehört neben Fälschung auch betrügerisches Benutzen bzw. Handeln in betrügerischer Absicht, welche im elektronischen Handel und bei elektronischen Geldtransaktionen sowohl auf Seiten des Käufers wie auch des Verkäufers grosse Unsicherheit verursachen kann.

Es ist eine Aufgabe der vorliegenden Erfindung, ein neues und besseres Transaktionsverfahren und ein Transaktionssystem vorzuschlagen, welches die heutigen Sicherheitsbedürfnisse erfüllt, den Anforderungen des modernen Handels an Flexibilität und Vernetzbarkeit genügt und gleichzeitig ohne riesige administrative und/oder soft- und hardwaremässig anfallende Kosten auskommt.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass ein elektronischer Datentoken für einen Geldbetragswert generiert wird, der Datentoken über ein Netzwerk übertragen wird und eine Zahlung bei einem Geldinstitut ausgelöst wird, wobei ein Tokenmodul einer ersten mobilen Netzwerkeinheit eines ersten Benutzers ein Datentoken generiert und mittels einer Datenmeldung zu einer Zentraleinheit eines Dienstanbieters übermittelt, welcher Datentoken einen bestimmbaren Geldbetragswert und Identifikation eines zweiten Benutzer einer zweiten mobilen Netzwerkeinheit umfasst, wobei die Zentraleinheit den Geldbetragswert auf einem Kreditkonto des ersten Benutzers belastet, welches Kreditkonto in einer Datenbank eines Speichermoduls der Zentraleinheit dem ersten Benutzer zugeordnet abgespeichert ist, wobei die Zentraleinheit mittels einer Datenmeldung an die mobile Netzwerkeinheit des zweiten Benutzers die Geldtransaktion bestätigt, welche Datenmeldung den Geldbetragswert einer Identifikation des ersten Benutzers umfasst und wobei die Zentraleinheit den Geldbetragswert auf einem Konto des zweiten Benutzers gutschreibt, welches Konto in einer Datenbank eines Geldinstituts und/oder der Zentraleinheit dem zweiten Benutzer zugeordnet abgespeichert ist. Der Datentoken bzw. die Datenmeldungen können verschlüsselt (z.B. auch via Public Key Kryptographie, wie z.B., auch SSL (Secure Sockets Layer), HTTPS etc.) oder elektronisch signiert sein. Ein Vorteil dieser Erfindung liegt u.a. darin, dass sie beliebigen Benutzern von z.B. Mobilfunknetzen erlaubt, Beträge bargeldlos zu übermitteln, d.h. Transaktionen mit anderen durchzuführen, und dabei einen hohen Sicherheitsstandart garantiert zu erhalten. Dies kann insbesondere bei Privatpersonen oder für kleinere Einkäufe sinnvoll sein, wo eine Geldüberweisung mit Kreditkarte oder mit einem ähnlichen System nicht möglich oder zu aufwendig ist. Neben dem hohen Sicherheitsstandart liegen weitere Vorteile der Erfindung darin, dass sie einfach und konstengünstig zu realisieren ist und mit einem minimalen Kosten-, Material- und Personalaufwand zu betreiben ist. Dadurch ist die Erfindung den Kreditierungen des Standes der Technik bei weitem überlegen.

In einer Ausführungsvariante reserviert die Zentraleinheit bei Erhalt des Datentoken den Geldbetragswert auf einem Kreditkonto des ersten Benutzers, übermittelt die Zentraleinheit mittels einer Datenmeldung eine Transaktionsauftragsbestätigung an die mobile Netzwerkeinheit des zweiten Benutzers, welche Transaktionsauftragsbestätigung mindestens eine Identifikation des ersten Benutzers und Angaben zum Geldbetragswert umfasst, wird der zweite Benutzer durch seine mobile Netzwerkeinheit aufgefordert, mittels Datenmeldung sein Einverständnis zur Transaktion zu geben und führt die Zentraleinheit die Belastung des Geldbetragwertes auf dem Konto des ersten Benutzers nach Erhalt des Einverständnisses des zweiten Benutzers durch. Die Übermittlung kann z.B. via GSM/SMS (Short Message Service), GSM/USSD (Unstructured Supplementary Service Data), GPRS oder UMTS geschehen. Ein Vorteil dieser Ausführungsvariante liegt u.a. darin, dass das der Sicherheitsstandart weiter erhöht wird. Insbesondere gibt diese Ausführungsvariante dem zweiten Benutzer eine zusätliche Kontrollmöglichkeit.

In einer Ausführungsvariante belastet die Zentraleinheit den Geldbetragswert automatisch über die Verrechnung der Benutzungsgebühren für die mobile Netzwerkeinheit des ersten Benutzers. Ein Vorteil der Ausführungsvariante ist u.a., dass dies z.B. bei Mobilfunknetzen die einfache Verrechnung über die monatliche Gebührenabrechung erlaubt. Gerade für kleine Beträge kann diese Ausführungsvariante ausserordentlich sinnvoll sein, ist aber prinzipiell natürlich auch für grössere Beträge geeignet.

In einer weiteren Ausführungsvariante wird der erste und/oder zweite Benutzer anhand der Rufnummer, die dem Identifikationsmodul des Mobilfunkgerätes zugeordnet ist, mittels einer Identifizierungseinheit im Mobilfunknetz eindeutig identifiziert und eine Identifikation des ersten und/oder zweiten Benutzers, wie z.B. die MSISDN (Mobile Subscriber ISDN) oder die IMSI (International Mobile Subscriber Identification), an die Zentraleinheit übertragen. Diese Ausführungsvariante hat u.a. den Vorteil, dass die Identifizierung automatisch vorgenommen wird, was für den ersten bzw. zweiten Benutzer die Verwendung des Verfahrens vereinfacht.

In einer Ausführungsvariante verschlüsselt die Zentraleinheit die Datenmeldung betreffend der Transaktionsauftragsbestätigung an den zweiten Benutzer mittels eines Verschlüsselungsmoduls, wobei jeweils ein definierbarer Schlüssel einem bestimmten Benutzer und einer bestimmten Zentraleinheit eines Transaktionsverfahrens zugeordnet ist. Diese Ausführungsvariante hat u.a. den Vorteil, dass die Sicherheit vor Betrug zusätzlich erhöht werden kann.

In einer weiteren Ausführungsvariante wird der Geldbetragswert als Gutschrift bei der Verrechnung der Benutzungsgebühren für die Benutzung des Netzwerkes durch den zweiten Benutzer verwendet, d.h. einem entsprechenden Konto des zweiten Benutzers zugeordnet bzw. gutgeschrieben. Die Benutzungsgebühren können z.B. die monatlichen Telefongebühren für Mobiltelefonabonnemente sein. Dies hat u.a. den Vorteil, dass z.B. bei einer Belastung ebenfalls über die Verrechnung der Benutzungsgebühren für die Benutzung des Netzwerkes für den ersten Benutzer, das Verfahren als ein vollständig unabhängiges bargeldloses Finanzsystem geführt werden kann, bei welchem ein Benutzer bargeldlos als erster Benutzer (Käufer) und dann wieder als zweiter Benutzer (Verkäufer) von Waren und Güter auftreten kann.

In einer weiteren Ausführungsvariante umfasst der Datentoken, der mittels des Tokenmoduls der ersten mobile Netzwerkeinheit eines ersten Benutzers generiert wurde, zusätzlich eine Identifikation des ersten Benutzers. Dies hat den Vorteil, dass z.B. der Sicherheitsstandart weiter erhöht werden kann.

In einer Ausführungsvariante erfolgt die Übertragung der Datenmeldungen mittels einer der Datenprotokolle SMS (Short Message Service), WAP (Wireless Application Protocol), HTTP (Hyper Text Transfer Protocol) oder USSD (Unstructured Supplementary Service Data). Diese Ausführungsvariante hat die gleichen Vorteile wie die vorhergehende Ausführungsvariante. Insbesondere hat sie u.a. den Vorteil, dass sie einfach und kostengünstig zu realisieren ist, da sie auf allgemein anerkannten Standarts beruht.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegten Figuren illustriert:

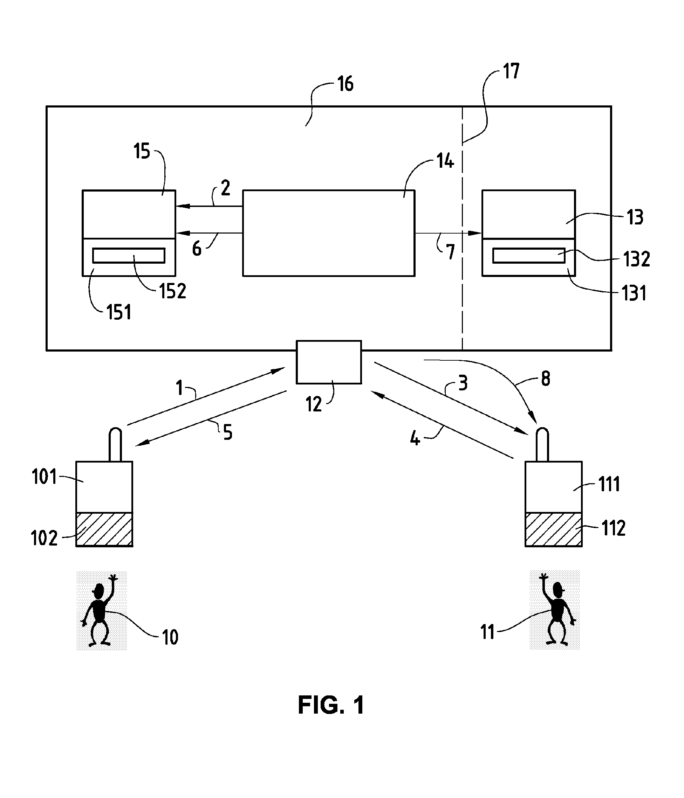

Figur 1 zeigt ein Blockdiagramm, welches schematisch ein computergestütztes, tokenbasierendes System und Verfahren zur Realisierung der vorliegenden Erfindung illustriert, bei welchem mittels eines Tokenmoduls 102 ein elektronischer Datentoken 1 für einen Geldbetragswert generiert wird, über ein Netzwerk 12 übertragen wird und eine Zahlung 7 für einen zweiten Benutzer 11 bei einem Geldinstitut ausgelöst wird.

Figur 1 illustriert eine Architektur, die zur Realisierung der Erfindung verwendet werden kann. Figur 1 zeigt ein Blockdiagramm, welches schematisch ein erfindungsgemässes computergestütztes, tokenbasierendes Transaktionsverfahren und -system illustriert. In der Figur 1 generiert ein Tokenmodul 102 einer ersten mobilen Netzwerkeinheit 101 eines ersten Benutzers 10 einen elektronischen Datentoken 1 und übermittelt ihn mittels einer Datenmeldung über ein Netzwerk 12 an eine Zentraleinheit 16 eines Dienstanbieters. Die Zentraleinheit 16 umfasst ein Tokenverwaltungsmodul 15, das eingehende und zu sendende Tokens und Datenmeldungen analysiert und verwaltet. Das Tokenverwaltungsmodul 15 kann hardware- und/oder softwaremässig realisiert sein. Das Tokenmodul 102 der ersten mobilen Netzwerkeinheit 101 kann beispielsweise ein programmiertes Softwaremodul sein, das auf einem Prozessor der mobilen Netzwerkeinheit 101 oder einer Chipkarte ausgeführt wird, oder ein hardwaremässig realisiertes Modul sein. Die Datentoken können z.B. über SMS oder Java Applets erzeugt sein. Bei der Ausführungsvariante mit der Chipkarte kann die Chipkarte z.B. eine multifunktionale SIM-Karte unter Berücksichtigung der MexE-Spezifikationen (Mobile Station Application Execution Environment) sein. Das Kommunikationsnetz 12 umfasst, wie bereits erwähnt, beispielsweise ein Mobilfunknetz, zum Beispiel ein GSM-, GPRS oder UMTS-Netz oder ein anderes, beispielsweise satellitenbasiertes Mobilfunknetz, oder ein Festnetz, zum Beispiel ein ISDN-Netz, das öffentliche geschaltete Telefonnetz, ein TVoder Radio-Kabelnetz, oder ein IP-Netz (Internet Protocol). Die Übertragung der Datenmeldungen kann z.B. mittels einer der Datenprotokolle SMS (Short Message Service), WAP (Wireless Application Protocol), HTTP (Hyper Text Transfer Protocol) oder USSD (Unstructured Supplementary Service Data) etc. erfolgen. Der Datentoken 1 umfasst einen bestimmbaren Geldbetragswert und Identifikation eines zweiten Benutzers 11 einer zweiten mobilen Netzwerkeinheit 111. Die Identifikation des Benutzers kann z.B. eine MSISDN (Mobile Subscriber ISDN), eine IMSI (International Mobile Subscriber Identification) oder eine eindeutige Kundennummer etc. sein. Gemäss der vorliegenden Erfindung sind die mobilen Netzwerkeinheiten 101/111 mit einer Zentraleinheit 16 über ein Netz 12 bidirektional verbunden. Die Verbindung zwischen mobiler Netzwerkeinheit 101/111 und Zentraleinheit 16 kann über verschiedene Datenkanäle, und nicht nur direkt über die beschriebenen Kommunikationsnetze 12 erfolgen. Die Daten können zwischen den mobilen Netzwerkeinheiten 101/111 und der Zentraleinheit 16, z.B. auch über eine Schnittstelle (z.B. eine drahtlose Schnittstelle wie eine Infrarotschnittstelle oder Bluetooth) an ein Datenterminal, und vom Datenterminal über ein Kommunikationsnetz, oder mittels einer in ein Datenterminal eingeführten entfernbaren Chipkarte der mobilen Netzwerkeinheit über dieses Datenterminal und ein Kommunikationsnetz an die Zentraleinheit 16 übertragen werden. Die mobilen Netzwerkeinheiten 101/111 und die Zentraleinheit 16 umfassen jeweils ein Kommunikationsmodul. Mittels der Kommunikationsmodule können Daten über das Netzwerk 12 ausgetauscht werden. Insbesondere in den mobilen Netzwerkeinheiten 101/111, die als mobile Vorrichtungen ausgestaltet sind, kann das Kommunikationsmodul z.B. ein Mobilfunkmodul für die Kommunikation über ein Mobilfunknetz 12 umfassen. Die Datentoken bzw. die Datenmeldungen können beispielsweise verschlüsselt oder unverschlüsselt sein. Dabei kann z.B. die Zentraleinheit 16 die Datenmeldung betreffend der Transaktionsauftragsbestätigung an den zweiten Benutzer 11 mittels eines Verschlüsslungsmoduls mit einem definierbarer Schlüssel, der einem bestimmten Benutzer und einer bestimmten Zentraleinheit eines Transaktionsverfahrens zugeordnet ist, verschlüsseln. Ebenso können die Datenmeldungen z.B. elektronisch signiert sein. Die elektronische Signatur authentifiziert beispielsweise das Hardware- oder Softwaremodul, welches die Datentoken bzw. Datenmeldungen generiert und/oder die mobile Netzwerkeinheit 101/111 und/oder den betreffenden Benutzer 10/11 der mobilen Netzwerkeinheit 101/111 und/oder das betreffende Kommunikationsmodul als authentische(n) Produzent/Quelle der Datenmeldungen. Die elektronische Signatur basiert beispielsweise auf einem Zertifikat, das durch eine Zertifizierungseinheit, beispielsweise eine Trusted Third Party (TTP), ausgegeben wird.

Die Verbindung zwischen der Zentraleinheit 16 und mobilen Netzwerkeinheiten 101/111 umfasst einen geschützten Kanal (Security Channel) bzw. die für den Schutz notwendigen Sicherheitsmechanismen (Verschlüsselung, limitiertes Zeitfenster, elektronische Signaturen etc.) in der Zentraleinheit 16 und den mobilen Netzwerkeinheiten 101/111. Die Downloadmechanismen zu den mobilen Netzwerkeinheiten 101/111 können ebenfalls DAB/MExEApplets umfassen. Die mobilen Netzwerkeinheiten 101/111 können insbesondere ein Mobilfunkgerät sein, das über ein Mobilfunknetz, zum Beispiel ein GSM-, GPRS, UMTS-Netz oder ein anderes, beispielsweise satellitenbasiertes Mobilfunknetz, oder ein Festnetz, zum Beispiel ein ISDN-Netz, das öffentliche geschaltete Telefonnetz, oder ein IP-Netz (insbesondere das Internet) mit der Zentraleinheit 16 verbunden ist. Der erste Benutzer 10 bestimmt mindestens einen Teil des Datentoken selber. Dies kann z.B. dadurch geschehen, dass der erste Benutzer 10 durch die erste mobile Netzwerkeinheit 101 aufgefordert wird, den Geldbetragswert und/oder Identifikation des zweiten Benutzers 11 über ein Interface einzugeben. Die vom Benutzer definierbaren Daten lassen sich beispielsweise über Eingabeelemente der mobilen Netzwerkeinheit 101 vom Benutzer bestimmen. Die Aufforderung zur Eingabe kann beispielsweise über das Tokenmodul 102 der Empfangsvorrichtung und von dort über elektroakustische Wandler und/oder visuelle Anzeigeeinheiten dem Benutzer 10 der mobilen Netzwerkeinheit 101 wiedergegeben werden. Die Eingabeelemente der mobilen Netzwerkeinheiten 101/111 können z.B. Tastaturen, graphische Eingabemittel (Maus, Trackball, Eyetracker bei Virtual Retinal Display (VRD) etc.), aber auch IVR (Interactive Voice Response) etc. umfassen. In der Zentraleinheit 16 wird der Datentoken überprüft und an ein Billingmodul 15 übertragen. Die Zentraleinheit 16 belastet den Geldbetragswert auf einem Kreditkonto des ersten Benutzers 10, wobei das Kreditkonto in einer Datenbank 152 eines Speichermoduls 151 des Billingmoduls 15 dem ersten Benutzer 10 zugeordnet abgespeichert ist. Bei Erreichen eines vordefinierten Wertes kann beispielsweise auch die Solvenz des betreffenden Benutzers von der Zentraleinheit 16 bei einem Geld- oder Finanzinstitut 13 überprüft werden. Der vordefinierte Wert (d.h. die Kreditlimite) des Geldbetragswertes kann z.B. in einem Datenspeicher der Zentraleinheit 16 und/oder der mobilen Netzwerkeinheit 101 gespeichert sein. Die Belastung des Gelbetragwertes bei einem Finanzinstitut 13 kann vor, teilweise vor oder nach (prepaid/postpaid) dem Erreichen des Geldbetragswertes erfolgen. In der letzteren Variante entspricht also der gespeicherte Geldbetragswert einer Kreditlimite, die je nach Option z.B. von der Zentraleinheit 16 bzw. der mobilen Netzwerkeinheit 101 gesetzt wird. Wird die Kreditlimite zur Überprüfung der Solvenz des ersten Benutzers 10 in einem Datenspeicher der mobilen Netzwerkeinheit 101 als Prepaid- oder Postpaid-Geldbetrag gespeichert, kann die Kreditlimite so realisiert werden, dass in einem für Benutzer 10 nicht beschreibbaren Datenspeicher der mobilen Netzwerkeinheit 101 ein Geldbetragswert gespeichert wird, der einem vorausbezahlten Geldbetrag oder der Kreditlimite entspricht. Der Datenspeicher kann beispielsweise fest in der mobilen Netzwerkeinheit 101 installiert sein, oder er befindet sich auf einem Datenträger der mobilen Netzwerkeinheit 101, beispielsweise einer Chipkarte, welcher Datenträger vom Benutzer aus der Empfangsvorrichtung 10 entfernt werden kann. Der Geldbetragswert wird beispielsweise über das Kommunikationsnetz 12, beispielsweise ein Mobilfunknetz, zum Beispiel ein GSM-, GPRS- oder UMTS-Netz oder ein anderes, beispielsweise satellitenbasiertes Mobilfunknetz, oder ein Festnetz, zum Beispiel ein ISDN-Netz, das öffentliche geschaltete Telefonnetz, oder ein IP-Netz (insbesondere das Internet), in den Datenspeicher geladen. Falls sich der Speicher auf einer Chipkarte befindet, kann der Geldbetragswert mittels einer Kartenlese-/Schreibvorrichtung geladen werden, in die die Chipkarte eingeführt wird.

Die Zentraleinheit 16 bestätigt mittels einer Datenmeldung 8 an die mobile Netzwerkeinheit 111 des zweiten Benutzers 11 die Geldtransaktion, wobei die Datenmeldung 8 den Geldbetragswert und/oder eine Identifikation des ersten Benutzers 10 umfasst. Die Identifikation des ersten Benutzers kann wie oben z.B. eine MSISDN (Mobile Subscriber ISDN), eine IMSI (International Mobile Subscriber Identification) oder eine Kundennummer etc. sein. Der Datentoken 1 sowie die Datenmeldung 2-8 können zusätzlich eine Identifikation der mobilen Netzwerkeinheit 101/111 bzw. des zugeordneten Benutzers 10/11 umfassen, mittels welcher mobilen Netzwerkeinheit 101/111 die Datenmeldungen 1-8 generiert wurden. Z.B. kann der Datentoken, der mittels dem Tokenmodul 102 der ersten mobilen Netzwerkeinheit 101 des ersten Benutzers 10 generiert wurde, zusätzlich eine Identifikation des ersten Benutzers 10 umfassen. Bei der Identifikation kann der erste und/oder zweite Benutzer 10/11 auch anhand der Rufnummer, die einem Identifikationsmodul des Mobilfunkgerätes 101/111 zugeordnet ist, mittels einer Identifizierungseinheit im Mobilfunknetz 12 eindeutig identifiziert werden. Die Identifikation des ersten und/oder zweiten Benutzers 10/11 wird dabei an die Zentraleinheit 16 übertragen. D.h. die Benutzeridentifizierung eines Benutzers einer mobilen Netzwerkeinheit 101/111 kann wie gesagt in den von der entsprechenden Netzwerkeinheit generierten Datenmeldung enthalten sein, wobei die Benutzeridentifizierung beispielsweise einer oben erwähnten eindeutigen Kundenadresse oder einer anderen Benutzeridentifizierung für andere Systeme entspricht, beispielsweise eine International Mobile Subscriber Identity (IMSI) oder eine MSISDN (Mobile Subscriber ISDN), die zur Identifizierung in einem Mobilfunknetz dient. Die Benutzeridentifizierung kann z.B. in einer Chipkarte, beispielsweise eine SIM-Karte (Subscriber Identification Module), der mobilen Netzwerkeinheit 101/111 gespeichert sein. Die Zentraleinheit 16 schreibt den Geldbetragswert auf einem Konto des zweiten Benutzers 11 gut 7, wobei das Konto in einer Datenbank 132 eines Speichermoduls 131 eines Geldinstituts oder Finanzinstituts 13 und/oder der Zentraleinheit 16 dem zweiten Benutzer 11 zugeordnet abgespeichert ist. Das Geldinstitut 13 kann der Zentraleinheit 16 zugeordnet sein 17 oder als unabhängige Netzwerkeinheit funktionieren. Die Zentraleinheit 16 kann den Geldbetragswert auch automatisch über die Verrechnung von Benutzungsgebühren für die mobile Netzwerkeinheit 101 des ersten Benutzers 10 belasten. Umgekehrt ist es auch möglich, dass der Geldbetragswert als Gutschrift bei der Verrechnung der Benutzungsgebühren für die Benutzung des Netzwerkes 12 einem entsprechenden Konto des zweiten Benutzers 11 zugeordnet wird.

Um den Sicherheitsstandart zu erhöhen kann die Zentraleinheit bei Erhalt des Datentoken 1 den Geldbetragswert auf einem Kreditkonto des ersten Benutzers 10 reservieren 2. Nach Reservation des Geldbetragswertes übermittelt die Zentraleinheit 16 mittels einer Datenmeldung 3 eine Transaktionsauftragsbestätigung an die mobile Netzwerkeinheit 111 des zweiten Benutzers 11. Die Transaktionsauftragsbestätigung umfasst mindestens eine Identifikation des ersten Benutzers 10 und Angaben zum Geldbetragswert. Der zweite Benutzer 11 wird durch ein Transaktionsmodul 112 der zweiten mobilen Netzwerkeinheit 111 aufgefordert wird mittels Datenmeldung 4 sein Einverständnis zur Transaktion zu geben. Die Zentraleinheit 16 führt erst nach Erhalt des Einverständnisses des zweiten Benutzers 11 die Belastung des Geldbetragwertes auf dem Konto des ersten Benutzers 10 durch.

Ebenso ist es vorstellbar, dass die mobilen Netzwerkeinheiten 101/111 eine oder mehrere Schnittstellen umfassen, insbesondere eine Geräteschnittstelle, zum Beispiel eine kontaktlose Schnittstelle, beispielsweise eine Infrarotschnittstelle, zum Beispiel eine High Speed Infrared (HSIR)-Schnittstelle oder eine IrDA-Schnittstelle (Infrared Data Association), eine induktive Schnittstelle, zum Beispiel eine Radio Frequency Identification (RFID)-Schnittstelle, eine Home RF (Radio Frequency)-Schnittstelle, eine Digital European Cordless Telecommunications (DECT)-Schnittstelle oder eine andere Cordless Telecommunications System (CTS)-Schnittstelle, oder eine hochfrequente Funkschnittstelle, zum Beispiel eine so genannte "Bluetooth-Schnittstelle". Über eine solche Schnittstelle kann die mobile Netzwerkeinheit 101/111 Daten mit externen Datenterminals ausserhalb der mobilen Netzwerkeinheit 101/111 austauschen, die über eine entsprechende Schnittstelle verfügen. Insbesondere können die oben erwähnten Datentoken 1 und/oder Datenmeldungen 3/4/5/8 über die Schnittstelle an das Datenterminal übertragen und durch das Datenterminal über das Kommunikationsnetz 12 an die Zentraleinheit 16 geleitet werden. Weiter ist zu erwähnen, dass es vorstellbar ist, dass der/die Datentoken und/oder die Datenmeldung(en) auf eine entfernbare Chipkarte oder ein anderes Speichermedium der Empfangsvorrichtung gespeichert werden. Damit können die Datentoken bzw. Datenmeldungen durch ein externes Datenterminal ausserhalb der mobilen Netzwerkeinheiten 101/111 gelesen werden, indem die Chipkarte in die Kartenlese-/Schreibvorrichtung des Datenterminals eingeführt wird. Die Daten können dann durch das Datenterminal über ein Kommunikationsnetz 12 an die Zentraleinheit 16 geleitet werden. Ein solches Datenterminal kann vorzugsweise ein öffentlich zugängliches Datenterminal, beispielsweise ein Bankautomat, ein Billettautomat oder eine Kassenvorrichtung sein.

Zum Schluss sei darauf hingewiesen, dass die Aufteilung von ausführbaren Funktionen und zu speichernden Datenelementen auf festinstallierte Speicher und Prozessoren in der mobilen Netzwerkeinheiten 101/111, respektive auf Speicher und Prozessoren der erwähnten aus der mobilen Netzwerkeinheiten 101/111 entfernbaren Chipkarte, beispielsweise unter Berücksichtigung der Spezifikationen der Mobile Station Application Execution Environment (MExE, GSM 02.57 und GSM 03.57) vorgenommen werden kann. Mittels geeigneter Synchronisierungsmechanismen können Datenelemente auf der Chipkarte gespeichert und jeweils bei der Einführung der Chipkarte in die mobilen Netzwerkeinheiten 101/111 in festinstallierte Speicherbereiche der mobilen Netzwerkeinheiten 101/111 kopiert werden, wo sie für Echtzeitoperationen zur Verfügung stehen. Veränderte Werte der in den festinstallierten Speicherbereichen gespeicherten Datenelemente können, beispielsweise durch einen parallelen Prozess, auf der Chipkarte aktualisiert werden. Der Fachmann wird verstehen, dass insbesondere vertrauliche Daten, die zwischen Prozessen ausgetauscht werden, die auf mehrere Prozessoren verteilt sind, aus Sicherheitsgründen jeweils gesichert übertragen werden.

## Patentansprüche

1. Computergestütztes, tokenbasierendes Transaktionsverfahren, bei welchem ein elektronischer Datentoken (1) für einen Geldbetragswert generiert wird, der Datentoken (1) über ein Netzwerk (12) übertragen wird und eine Zahlung (7) bei einem Geldinstitut ausgelöst wird, **dadurch gekennzeichnet,**
**dass** ein Tokenmodul (102) einer ersten mobile Netzwerkeinheit (101) eines ersten Benutzers (10) ein Datentoken (1) generiert und mittels einer Datenmeldung zu einer Zentraleinheit (16) eines Dienstanbieters übermittelt, welcher Datentoken (1) einen bestimmbaren Geldbetragswert und Identifikation eines zweiten Benutzers (11) einer zweiten mobilen Netzwerkeinheit (111) umfasst,
**dass** die Zentraleinheit (16) den Geldbetragswert auf einem Kreditkonto des ersten Benutzers (10) belastet, wobei das Kreditkonto in einer Datenbank (152) eines Speichermoduls (151) der Zentraleinheit (16) dem ersten Benutzer (10) zugeordnet abgespeichert ist,
**dass** die Zentraleinheit (16) mittels einer Datenmeldung (2) an die mobile Netzwerkeinheit (111) des zweiten Benutzers (11) die Geldtransaktion bestätigt, welche Datenmeldung (8) den Geldbetragswert und/oder eine Identifikation des ersten Benutzers (10) umfasst und
**dass** die Zentraleinheit (16) den Geldbetragswert auf einem Konto des zweiten Benutzers (11) gutschreibt (7), wobei das Konto in einer Datenbank (132) eines Speichermoduls (131) eines Geldinstituts (13) und/oder der Zentraleinheit (16) dem zweiten Benutzer (11) zugeordnet abgespeichert ist.

2. Verfahren nach Anspruch 1, **dadurch gekennzeichnet, dass** die Zentraleinheit bei Erhalt des Datentokens (1) den Geldbetragswert auf einem Kreditkonto des ersten Benutzers (10) reserviert (2), dass die Zentraleinheit (16) mittels einer Datenmeldung (3) eine Transaktionsauftragsbestätigung an die mobile Netzwerkeinheit (111) des zweiten Benutzers (11) übermittelt, welche Transaktionsauftragsbestätigung mindestens eine Identifikation des ersten Benutzers (10) und Angaben zum Geldbetragswert umfasst, dass der zweite Benutzer (11) durch ein Transaktionsmodul (112) seiner mobilen Netzwerkeinheit (11) aufgefordert wird mittels Datenmeldung (4) sein Einverständnis zur Transaktion zu geben und dass die Zentraleinheit (16) die Belastung des Geldbetragwertes auf dem Konto des ersten Benutzers (10) nach Erhalt des Einverständnisses (4) des zweiten Benutzers (11) durchführt.

3. Verfahren nach einem der Ansprüche 1 oder 2, **dadurch gekennzeichnet, dass** die Zentraleinheit (16) den Geldbetragswert automatisch über die Verrechnung der Benutzungsgebühren für die mobile Netzwerkeinheit (101) des ersten Benutzers (10) belastet.

4. Verfahren nach einem der Ansprüche 1 bis 3, **dadurch gekennzeichnet, dass** der erste und/oder zweite Benutzer (10/11) anhand der Rufnummer, die dem Identifikationsmodul des Mobilfunkgerätes (101/111) zugeordnet ist, mittels einer Identifizierungseinheit im Mobilfunknetz (12) eindeutig identifiziert wird und eine Identifikation des ersten und/oder zweiten Benutzers (10/11) an die Zentraleinheit (16) übertragen wird.

5. Verfahren nach einem der Ansprüche 2 bis 4, **dadurch gekennzeichnet, dass** die Zentraleinheit (16) die Datenmeldung betreffend der Transaktionsauftragsbestätigung an den zweiten Benutzer (11) mittels eines Verschlüsslungsmoduls verschlüsselt, wobei jeweils ein definierbarer Schlüssel einem bestimmten Benutzer und einer bestimmten Zentraleinheit eines Transaktionsverfahrens zugeordnet ist.

6. Verfahren nach einem der Ansprüche 1 bis 5, **dadurch gekennzeichnet, dass** der Geldbetragswert als Gutschrift bei der Verrechnung der Benutzungsgebühren für die Benutzung des Netzwerkes (12) einem entsprechenden Konto des zweiten Benutzers (11) zugeordnet wird.

7. Verfahren nach einem der Ansprüche 1 bis 6, **dadurch gekennzeichnet, dass** der Datentoken, der mittels dem Tokenmodul (102) der ersten mobilen Netzwerkeinheit (101) des ersten Benutzers (10) generiert wurde, zusätzlich eine Identifikation des ersten Benutzers (10) umfasst.

8. Verfahren nach einem der Ansprüche 1 bis 7, **dadurch gekennzeichnet, dass** die Übertragung der Datenmeldungen mittels eines der Datenprotokolle SMS (Short Message Service), WAP (Wireless Application Protocol), HTTP (Hyper Text Transfer Protocol) oder USSD (Unstructured Supplementary Service Data) erfolgt.
